# EUROPÄISCHE PATENTSCHRIFT

(11) **EP 1 798 019 B1**
(45) Veröffentlichungstag und Bekanntmachung des Hinweises auf die Patenterteilung: **25.06.2008**
(21) Anmeldenummer: 06025659.1
(22) Anmeldetag: 12.12.2006
(51) Int. Cl.: B29C 65/08, B23Q 1/01, B60R 19/02

(54) **Vorrichtung zur Durchführung von Stanz- und/oder Fräs-, Schweiss- und/oder Klebearbeiten an grossflächigen, dreidimensionalen Kunststoffteilen**
Apparatus for performing punching, milling, welding or gluing processing steps on large surfaced, three dimensional plastic workpieces
Dispositif pour réaliser des travaux d'estampage, de fraisage, de soudage ou bien de collage sur des pièces en plastique tridimensionnelles de grandes dimensions

(30) Priorität: 14.12.2005 DE 102005060026
(43) Veröffentlichungstag der Anmeldung: 20.06.2007
(73) Patentinhaber: Maschinenfabrik Spaichingen GmbH, 78549 Spaichingen (DE)
(72) Erfinder: Distel, Armin, 78647 Trossingen (DE)
(74) Vertreter: Manitz, Finsterwald & Partner GbR

(56) Entgegenhaltungen:
- EP-A- 1 468 794
- EP-A- 1 586 427
- WO-A-20/04058447

## Beschreibung

Die Erfindung betrifft eine Vorrichtung der im Oberbegriff des Anspruchs 1 angegebenen Gattung.

Vorrichtungen dieser Art, die auch als Stanz/Schweiß-Maschinen bezeichnet werden, finden vorzugsweise bei der Herstellung von großflächigen, dreidimensionalen Kunststoffteilen wie z. B. Stoßfängern, Spoilern, Verkleidungen od. dgl. für die Automobilindustrie Anwendung. Hier besteht z. B. die Aufgabe, in einem ersten Arbeitsgang das Kunststoffteil durch Stanzen mit wenigstens einem Loch zu versehen. Danach sollen in einem zweiten Arbeitsgang Aufnahmeteile (Adapter) für verschiedene Zusatzgeräte in diese Löcher eingesetzt und durch Schweißen oder Kleben in diesen befestigt werden. Bei den Zusatzgeräten kann es sich z. B. um Parksensoren, Scheinwerfer-Reinigungsanlagen, Anhänger-Zugvorrichtungen, Auspuffanlagen oder Zierleisten handeln. Die Löcher können je nach Fall aus runden, geschlossenen Löchern oder aus randoffenen Ausbrüchen mit jeweils vom Einzelfall abhängigen Querschnitten bestehen. Die Befestigung der Aufnahmeteile in den Löchern kann durch Ultraschall-oder Laserschweißen od. dgl. oder auch durch Kleben erfolgen. Manchmal wird dauch gefordert, die Stanzlöcher durch Fräsen konisch auszuformen.

Wegen der zwei oder mehr zusammengehörenden Arbeitsgänge ist es bekannt (z. B. DE 10 2004 018 309 A1), kombinierte Stanz- und Schweiß- bzw. Klebvorrichtungen vorzusehen. Diese sind so konstruiert, dass die Stoßfänger an einer Frontseite der Vorrichtung bzw. Maschine in eine dort angeordnete, auf einem Schiebetisch montierte Aufnahme eingelegt werden, worauf der Schiebetisch mit einem Motor od. dgl. zu einem Stanzbügel gefahren wird, der an einer Rückseite der Vorrichtung angeordnet ist, um dort zunächst die erforderlichen Löcher zu stanzen. Daran anschließend wird der Schiebetisch wieder zur Frontseite gefahren, um die Aufnahmeteile, die zuvor auf im Schweißraum angeordnete Zuführdorne aufgesteckt wurden, in die gestanzten Löcher einzulegen und danach in diesen zu befestigen. Nachteilig daran ist einerseits, dass zwei separate Bearbeitungsräume und ein zwischen diesen hin- und herfahrbarer Schiebetisch benötigt werden, was einen hohen Raumbedarf und aufwändige Antriebe und Schiebetischkonstruktionen erfordert. Andererseits ist es schwierig, große Teile wie Stoßfänger od. dgl. als Ganzes mit einer so großen Präzision zu verschieben, dass die in einem ersten Werkraum hergestellten Stanzlöcher nach der Verschiebung der Kunststoffteile in einen zweiten Werkraum exakt relativ zu den nachfolgenden Bearbeitungswerkzeugen positioniert sind. Schon ein kleiner Versatz von wenigen Zehntel Millimetern kann zu optisch unschönen und daher nicht annnehmbaren Unregelmäßigkeiten an den äußeren Oberflächen der Werkstücke führen.

Ausgehend davon besteht das technische Problem der vorliegenden Erfindung darin, die Vorrichtung der eingangs bezeichneten Gattung so auszubilden, dass nicht mehrere Werkräume mit zwischen diesen angeordneten Schiebetischen benötigt werden und sowohl Werkzeug- als auch Werkstückwechsel auf einfache Weise durchführbar sind.

Gelöst wird dieses Problem durch die kennzeichnenden Merkmale des Anspruchs 1.

Die Erfindung bringt den Vorteil mit sich, dass die zu bearbeitenden Kunststoffteile nicht zwischen zwei Werkräumen hin- und hergefahren werden brauchen, sondern während der Bearbeitung stationär angeordnet sind und stattdessen die Werkzeuge entsprechend bewegt werden. Das erspart den bisher üblichen Schiebetisch und erfordert keine zusätzlichen Justierungen zur Herstellung einer vorgegebenen Lage der Kunststoffteile in dem jeweiligen Werkraum. Wird die wenigstens eine Bearbeitungsstation insgesamt als Wechselmodul ausgebildet, dann können außerhalb der Vorrichtung im Prinzip beliebig viele Wechselmodule für unterschiedliche Werkstücke und/oder unterschiedliche Bearbeitungsaufgaben vorbereitet und auf Lager gehalten werden. Ein solches Maschinenkonzept eignet sich insbesondere bei Vorrichtungen mit einer Vielzahl von Bearbeitungsstationen sowie für Kleinserien, da in diesen Fällen nur das Wechselmodul ausgetauscht werden braucht, während die Grundeinheit erhalten bleiben kann.

Weitere vorteilhafte Merkmale der Erfindung ergeben sich aus den Unteransprüchen.

Die Erfindung wird nachfolgend in Verbindung mit den beiliegenden Zeichnungen an einem derzeit für am besten gehaltenen Ausführungsbeispiel näher erläutert. Es zeigen:
Fig. 1 in einer perspektivischen Darstellung eine Grundeinheit einer erfmdungsgemäßen Vorrichtung;
Fig. 2 in einer perspektivischen Darstellung ein Wechselmodul für die Grundeinheit nach Fig. 1;
Fig. 3 in einer perspektivischen Darstellung die Grundeinheit nach Fig. 1 mit einem eingesetzten Wechselmodul nach Fig. 2; und
Fig. 4 und 5 perspektivische Darstellungen einer erfindungsgemäßen Bearbeitungsstation der Vorrichtung nach Fig. 1 bis 3 in unterschiedlichen Betriebsstellungen und unter Weglassung einer Werkstück-Aufnahme und des zugehörigen Werkstücks.

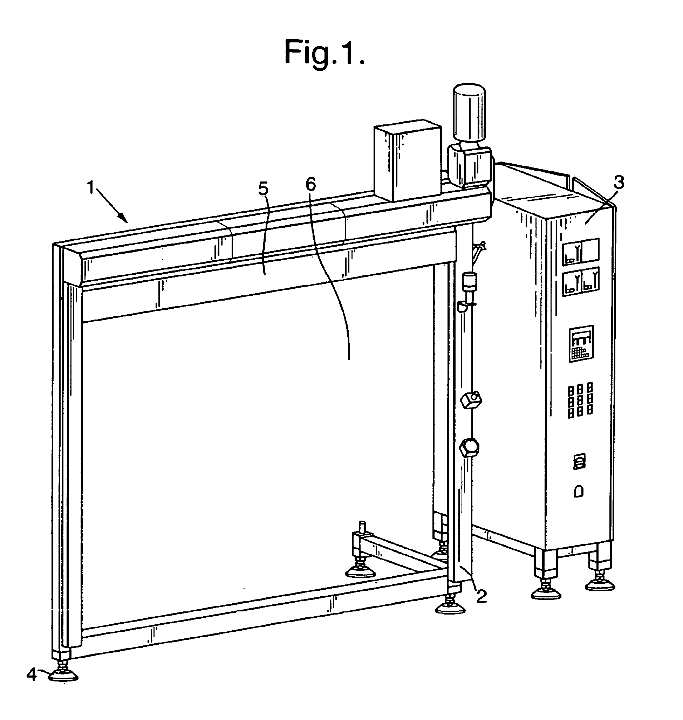

Fig. 1 zeigt eine Grundeinheit 1 einer erfmdungsgemäßen Vorrichtung zur Durchführung von Stanz- sowie Fräs-, Schweiß- und/oder Klebearbeiten. Die Grundeinheit 1 enthält im Ausführungsbeispiel ein nur grob schematisch dargestelltes Grundgestell 2 und einen Schaltschrank 3, in dem die zur Durchführung der verschiedenen Arbeiten benötigten, z. B. elektrischen, elektronischen und/oder pneumatischen Einrichtungen untergebracht sind. Das Grundgestell 1 ist auf Füßen 4 abgestützt und weist an seiner Vorderseite zweckmäßig einen aus geeigneten Gestellteilen gebildeten Rahmen auf, der eine Öffnung 6 umgibt und einen quadratischen oder rechteckigen Querschnitt aufweist.

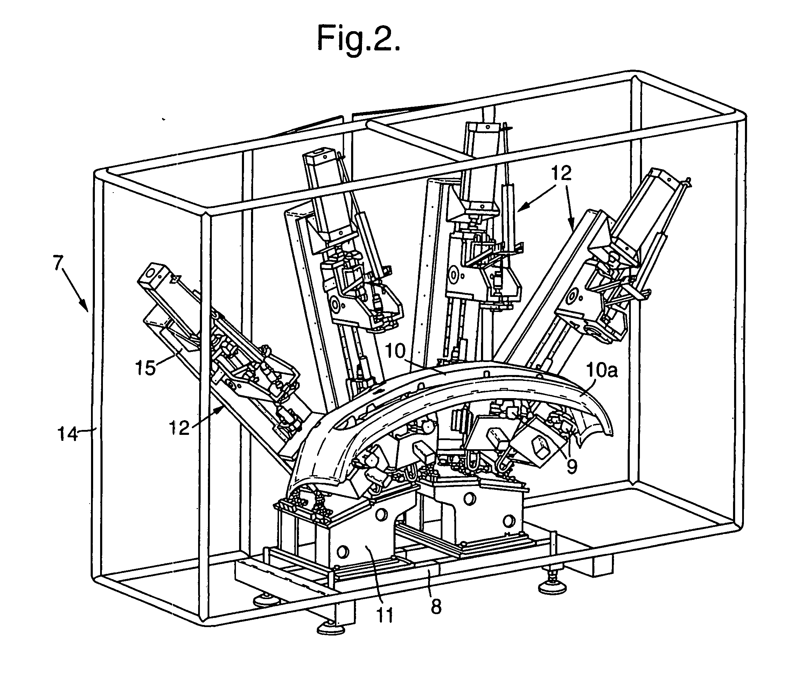

Der Grundeinheit 1 nach Fig. 1 ist wenigstens ein Wechselmodul 7 (Fig. 2) zugeordnet, in dem alle zur Durchführung einer gegebenen Bearbeitungsaufgabe erforderlichen Teile untergebracht sind. Das Wechselmodul 7 enthält insbesondere eine Tragplatte 8, die vorzugsweise auf Füßen und so abgestützt ist, dass zwischen ihr und dem Erdboden ein Freiraum entsteht, in den zum Transport des Wechselmoduls 7 die Gabeln eines Hub- bzw. Gabelstaplers eingefahren werden können. Alternativ wäre es aber auch möglich, die Tragplatte 8 auf Rollen oder Rädern fahrbar zu montieren.

Auf einer Vorderseite der Tragplatte 8 ist eine nicht näher dargestellte Aufnahme 9 abgestützt, die zur Auflage eines Werkstücks in Form eines Kunststoffteils 10 mit an sich bekannten und daher nicht näher erläuterten Spannmitteln od. dgl. dient, wie z. B. in der Offenlegungsschrift DE 10 2004 018 309 A1 beschrieben ist, die zur Vermeidung von Wiederholungen hiermit durch Referenz auf sie zum Gegenstand der vorliegenden Offenbarung gemacht wird. Im Beispielsfall ist das Kunststoffteil 10 ein leicht gekrümmter, im Querschnitt z. B. U-förmiger Stoßfänger für ein Kraftfahrzeug.

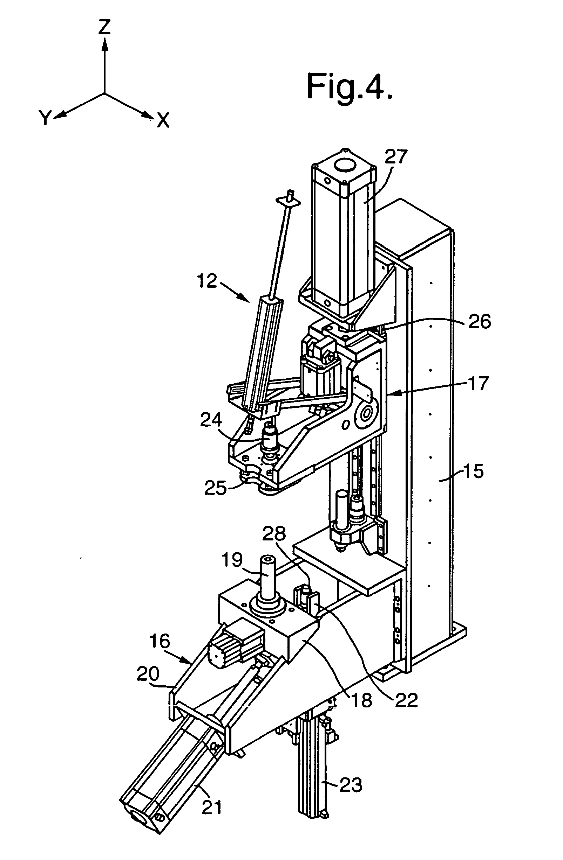

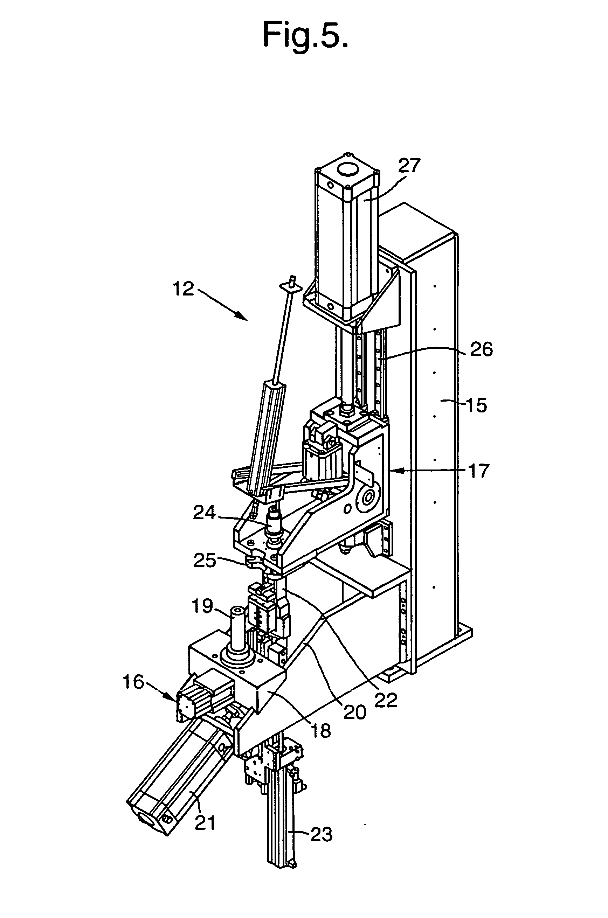

Auf der Tragplatte 8 ist ferner wenigstens eine Konsole 11 angebracht, an der wenigstens eine Bearbeitungsstation 12 befestigt ist, deren Arbeitsweise weiter unten anhand der Fig. 4 und 5 näher erläutert wird. Im Ausführungsbeispiel sind vier derartige Bearbeitungsstationen 12 vorhanden, die in Längsrichtung des Kunststoffteils 10 erstreckt sind, unterschiedliche Winkelstellungen zu diesem einnehmen können und nebeneinander auf zwei der Konsolen 11 montiert werden. Die Zahl und die relative Lage der Bearbeitungsstationen 12 hängt u. a. von der Form und der Größe der Kunststoffteile 10 und der zu lösenden Bearbeitungsaufgabe ab.

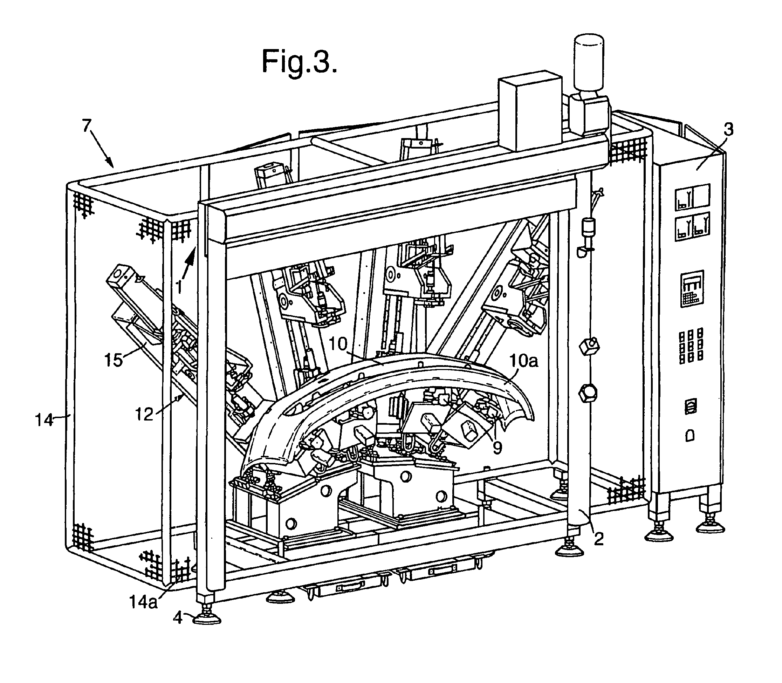

Wie Fig. 3 zeigt, kann das Wechselmodul 7 mit seiner Vorderseite voraus von hinten her in das Grundgestell 2 eingefahren werden, bis es z. B. an der Rückseite des Rahmens 5 anliegt und dabei eine gewünschte Bearbeitungsstellung einnimmt. In dieser Position ist die stationär in der Bearbeitungsstation 12 angeordnete Aufnahme 9 durch die Öffnung 6 hindurch für das Einlegen und Herausnehmen der Kunststoffteile 10 zugänglich. Um Verletzungen der Bedienungsperson zu vermeiden, werden am vorderen Teil des Rahmens 5 des Grundgestells 2 vorzugsweise übliche Sicherheitsvorkehrungen getroffen, indem dort z. B. ein Mittel zur Erzeugung eines Lichtvorhangs, ein Rolltor od. dgl. angeordnet wird. Außerdem kann die Grundplatte 8, wie Fig. 2 und 3 zeigen, von einem ggf. mit einem Schutzgitter 14a (Fig. 3) versehenen Gestell 14 umgeben sein. Alternativ und bevorzugt wird allerdings das Grundgestell 2 mit entsprechenden Stangen und einem entsprechenden Schutzgitter versehen, in welchem Fall das Wechselmodul 7 im wesentlichen nur die Tragplatte 8 und die auf dieser befestigten Bearbeitungsstationen 12 enthält, während das Grundgestell 2 ein Gehäuse für das Wechselmodul 7 bildet.

Bei Bedarf können ferner nicht dargestellte Mittel vorgesehen sein, um das Wechselmodul 7 in seiner aus Fig. 3 ersichtlichen Bearbeitungsstellung fest mit dem Grundgestell 2 zu verbinden. Im Prinzip genügt es jedoch, das Wechselmodul 7 in der Bearbeitungsstellung mittels einer Bremse od. dgl. festzulegen, da eine genaue Positionierung relativ zum Grundgestell 2 für die Bearbeitung der Kunststoffteile 10 nicht erforderlich ist.

Bei den im Schaltschrank 3 untergebrachten Einrichtungen handelt es sich z. B. um elektrische Netzteile, pneumatische Aggregate zur Steuerung von pneumatischen Zylinder/Kolben-Anordnungen, elektronische Steuereinrichtungen, Ultraschallgeneratoren zum Betreiben von Sonotroden od. dgl., d. h. um diejenigen Einrichtungen, die zum Betreiben der in den Bearbeitungsstationen 12 vorgesehenen Werkzeuge erforderlich sind. Dabei sind diese Einrichtungen, wie nicht näher dargestellt ist, mit entsprechenden Versorgungsleitungen wie z. B. elektrischen Kabeln, Pneumatikschläuchen od. dgl. versehen, die nach dem Einbringen eines Wechselmoduls 7 in das Grundgestell 2 mit Hilfe von Steckverbindern oder anderen Schnellkupplungen mit an den Bearbeitungsstationen 12 angebrachten Anschlusselementen verbunden werden.

Die Betriebsweise der insoweit beschriebenen Vorrichtung ist im wesentlichen wie folgt:

Solange eine bestimmte Werkstückart, z. B. das Kunststoffteil 10, zu bearbeiten ist, bleibt das Wechselmodul 7 im Grundgestell 2. Die Steuerung der jeweiligen Werkzeuge erfolgt dann vom Schaltschrank 3 aus nach einem vorgegebenen Programm. Ist ein Wechsel der Kunststoffteile erforderlich, wird das Wechselmodul 7 nach seiner Trennung von den Versorgungsleitungen z. B. mit einem Hubstapler aus dem Grundgestell 2 herausgefahren und durch ein neues, bereits fertig vorbereitetes Wechselmodul 7 ersetzt. Nach dem erneuten Anschluss der Versorgungsleitungen kann sofort mit der Bearbeitung der anderen Kunststoffteile begonnen werden. Dazu sind keinerlei Justierarbeiten od. dgl. erforderlich, insbesondere wenn alle für einen Bearbeitungsmodus erforderlichen Bearbeitungsstationen 12 relativ zueinander und zur Aufnahme 9 genau positioniert werden, bevor das Wechselmodul 7 in das Grundgestell 2 eingefahren wird.

Ein besonderer Vorteil der beschriebenen Vorrichtung besteht darin, dass beim Wechsel der zu bearbeitenden Kunststoffteile nicht nur keine umständlichen Umrüstarbeiten erforderlich sind, sondern auch keine komplette neue Bearbeitungsvorrichtung benötigt wird. Die Grundeinheit 1, bestehend aus dem Grundgestell 2 und dem Schaltschrank 3, ist vielmehr immer dieselbe. Für unterschiedliche Bearbeitungsaufgaben erforderliche Programme können durch eine entsprechende Software im Schaltschrank 3 berücksichtigt werden.

In einer bevorzugten Weiterbildung wird vorgesehen, das Auswechseln der Wechselmodule 7 automatisch vorzunehmen. Dies kann z. B. dadurch erfolgen, dass das jeweils benötigte Wechselmodul 7 aus einem Speicher abgerufen und mittels einer einem Paternoster ähnlichen oder irgendeiner anderen Transportvorrichtung ausgewechselt wird. Die Steuerung dieses Vorgangs kann mittels eines ebenfalls im Schaltschrank abgelegten Programms erfolgen.

Fig. 4 und 5 zeigen ein bevorzugtes Ausführungsbeispiel einer erfindungsgemäßen, speziell zur Durchführung von Stanz- und Fräs-, Schweiß- oder Klebearbeiten geeigneten und bestimmten Bearbeitungsstation 12. Die Bearbeitungsstation 12 weist einen stationär an der Tragplatte 8 des Wechselmoduls 7 befestigten Bügel 15 mit rechteckigem oder quadratischem Querschnitt auf, an dem insbesondere ein allgemein mit dem Bezugszeichen 16 versehenes Unterwerkzeug und ein allgemein mit dem Bezugszeichen 17 versehenes Oberwerkzeug befestigt sind. Das Unterwerkzeug 16 enthält eine Halterung oder Konsole 18, die relativ zum Bügel 15 sowie zur Aufnahme 9, die in Fig. 4 und 5 aus Gründen der Klarheit ebenso wie das Kunststoffteil 10 nicht dargestellt ist, verschiebbar gelagert ist. Bei der Bearbeitung eines Kunststoffteils 10 in Form eines Stoßfängers gemäß Fig. 2 und 3, dessen Längsrichtung z. B. parallel zu der in Fig. 4 angedeuteten x-Achse eines gedachten Koordinatensystems verläuft, ist die Halterung 18 vorzugsweise quer zum Kunststoffteil 10 verschiebbar.

Auf der Halterung 18 ist ein erstes Werkzeug 19 in Form einer für einen Stanzvorgang benötigten Matrize montiert. Weiterhin ist eine mit dem Bügel 15 verbundene Führungsbahn 20 vorgesehen, längs derer die Halterung 18 verschiebbar ist. Diese Führung 20 verläuft nicht nur quer zur x-Richtung, sondern vorzugsweise auch schräg zur z-Achse des gedachten Koordinatensystems, d. h. sie bildet mit der xz-Ebene einen von 90° abweichenden Winkel derart, dass die Halterung 18 aus einer in Fig. 4 dargestellten Stellung in eine aus Fig. 5 ersichtliche Stellung bewegt und dabei gegenüber dem Kunststoffteil 10 abgesenkt werden kann. Eine derartige, schräg verlaufende Führung 20 ist insbesondere dann zweckmäßig, wenn das Kunststoffteil 10 entsprechend Fig. 2 und 3 einen U-förmigen Querschnitt besitzt und in seiner Bearbeitungsstellung nach unten geöffnet ist, da in diesem Fall das Werkzeug 19 nach unten aus dem Kunststoffteil 10 bzw. dem Stoßfänger herausgefahren werden kann, ohne mit vorderen bzw. hinteren Seitenwänden 10a desselben (Fig. 2, 3) zu kollidieren. Zur Verschiebung der Halterung 18 dient z. B. eine Zylinder/Kolben-Anordnung 21, deren Kolbenstange an der Halterung 18 und deren Zylinder an der Bearbeitungsstation 12 bzw. an deren Bügel 15 befestigt ist (oder umgekehrt). Alternativ wäre es aber auch möglich, das Werkzeug 19 durch Drehen der Halterung 18, durch Verschiebung der Halterung 18 in x-Richtung oder auf sonstige Weise in eine Position zu bringen, in welcher das Werkzeug 19 eine Außerarbeitsstellung einnimmt.

In Bewegungsrichtung der Halterung 18 hinter dem Werkzeug 19 ist das Unterwerkzeug 16 mit einem zweiten Werkzeug 22 versehen, das ebenfalls an der Haslterung 18 befestigt und im Fall des Kunststoffschweißens durch Ultraschall vorzugsweise eine Sonotrode ist. Alternativ kann das Werkzeug 22 aber auch z. B. zum Heißluft-, Heizkontakt- oder Laserschweißen eingerichtet sein. Das Werkzeug 22 ist zusätzlich quer zur Bewegungsbahn der Halterung 18 und daher hier z. B. in z-Richtung des gedachten Koordinatensystems verschiebbar gelagert. Zur Verschiebung des Werkzeugs 22 dient z. B. eine weitere Zylinder/Kolben-Anordnung 23, deren Zylinder an der Halterung 18 und deren Kolbenstange am Werkzeug 22 befestigt ist (oder umgekehrt).

Das Oberwerkzeug 17 der Bearbeitungsstation 12 enthält ein drittes, zum Stanzen bestimmtes Werkzeug 24 in Form eines mit dem ersten Werkzeug 19 zusammen-wirkenden Stanzstempels, dem vorzugsweise ein Niederhalter 25 für die in der Aufnahme 9 liegenden Kunststoffteile 10 zugeordnet ist. Der Niederhalter 25 ist unterhalb des Stanzwerkzeugs 24 angeordnet und dort, wo das Stanzloch herzustellen ist, mit einem Durchgang für den Stanzstempel 24 versehen. Außerdem ist der Niederhalter 25 unterhalb vom Stanzstempel 24 angeordnet und mit einer nicht gezeigten Feder von diesem aus in z-Richtung nach unten vorgespannt. Alternativ kann der Stanzstempel auch durch die Sonotrode einer UV-Stanzeinrichtung oder durch irgendein anderes Stanzwerkzeug ersetzt sein. Das Oberwerkzeug 17 kann als Ganzes längs einer am Bügel 15 angebrachten Führung 26 auf- und abbewegt, d. h. hier in z-Richtung des gedachten Koordinatensystems verschoben werden. Zur Verschiebung des Oberwerkzeugs 17 dient z. B. eine' Zylinder/Kolben-Anordnung 27, deren Kolbenstange am Oberwerkzeug 17 und deren Zylinder am Bügel 15 bzw. an der Bearbeitungsstation 12 befestigt ist (oder umgekehrt). Alle drei Zylinder/Kolben-Anordnungen 21, 23 und 27 werden vorzugsweise pneumatisch betrieben. Alternativ wäre es möglich, sie durch Elektromotoren oder andere geeignete Antriebe zu ersetzen.

Die Betriebsweise der anhand der Fig. 4 und 5 beschriebenen Bearbeitungsstation 12 ist im wesentlichen wie folgt:

Nach dem Einfahren des Wechselmoduls 7 in das Grundgestell 2 wird durch dessen vordere Öffnung 6 (Fig. 1) hindurch ein Kunststoffteil 10 auf die Aufnahme 9 gelegt und an dieser befestigt. Die Halterung 18 nimmt dabei die aus Fig. 4 ersichtliche Arbeitsstellung ein, in der sich die Matrize 19 unmittelbar an derjenigen Stelle des Kunststoffteils 10 befindet, an welcher dieses gestanzt werden soll. Anschließend wird über den Schaltschrank 3 zunächst ein Stanzvorgang eingeleitet. Das hat zur Folge, dass das Oberwerkzeug 17 mittels der Zylinder/Kolben-Anordnung 27 aus der in Fig. 4 ersichtlichen Stellung in z-Richtung nach unten, d. h. in Richtung der Oberfläche des Kunststoffteils 10 gefahren wird, wie Fig. 5 zeigt. Das Stanzwerkzeug 24 ist dabei im wesentlichen koaxial auf die Matrize 19 ausgerichtet, so dass das Kunststoffteil 10 an der vorgesehenen Stelle gestanzt und dabei gleichzeitig durch den Niederhalter 25 gegen die Aufnahme gedrückt wird. Die Lage der Werkzeuge 19, 24 ist insbesondere durch eine Achse vorgegeben, die hier die Stanzachse ist.

Im Anschluss daran wird die Zylinder/Kolben-Anordnung 21 betätigt, wodurch die Halterung 18 mit dem ersten Werkzeug 19 längs der Führung 20 schräg nach unten in die Außerarbeitssstellung bewegt und dabei von der Unterseite des Kunststoffteils 10 entfernt wird. Gleichzeitig damit wird das zweite Werkzeug 28 unter das zuvor gebildete Stanzloch bewegt. Danach wird die Zylinder/Kolben-Anordnung 23 betätigt, die das bis dahin abgesenkte Schweißwerkzeug 22 dadurch so weit anhebt und so unterhalb des Kunststoffteils 10 anordnet, wie es für einen Schweißvorgang erforderlich ist. Diese Bewegung ist dadurch möglich, dass die Halterung 18 zusammen mit dem ersten Werkzeug 19 zuvor zur Seite hin wegbewegt wurde. Vorzugsweise ist dem Schweißwerkzeug 22 außerdem ein Dorn 28 (Fig. 4) zugeordnet, auf den vor dem Schweißvorgang oder besser vor dem Auflegen des Kunststoffteils auf die Aufnahme 9 manuell oder mit automatischen Mitteln ein Aufnahmeteil oder Adapter aufgesteckt wird. Dieser Dorn 28 wird, wie es beim Ultraschallschweißen üblich ist, so ausgebildet und angeordnet, dass er den Adapter beim Hochfahren des Schweißwerkzeugs 22 mittels der Zylinder/Kolben-Anordnung 23 automatisch in die zuvor gestanzte Aussparung einlegt. Zu diesem Zweck wird der Stanzstempel 24 zuvor durch Betätigung der Zylinder/Kolben-Anordnung 27 etwas nach oben gefahren, um das Stanzloch freizugeben, während der Niederhalter 25 durch die Kraft der Feder das Kunststoffteil 10 weiter gegen die Aufnahme 9 drückt. Sowohl die Stanzarbeiten als auch die Schweißarbeiten werden somit beim Ausführungsbeispiel an denselben, durch die vorgegebene Stanzachse festgelegten Orten der Kunststoffteile 10 durchgeführt. Gleichzeitig oder vor dem Schweißvorgang wird vorzugsweise das Oberwerkzeug 17 oder der Niederhalter 25 für die Dauer des Schweißvorgangs in der aus Fig. 5 ersichtlichen Stellung verriegelt, damit der Niederhalter 25 nicht durch einen etwa nachlassenden Druck in der Zylinder/Kolben-Anordnung 27 angehoben wird, sondern das Kunststoffteil 10 weiterhin in Stellung hält.

Nach Beendigung des dann auszuführenden Schweißvorgangs mittels der Sonotrode 22 od. dgl. werden die Zylinder/Kolben-Anordnungen 21, 23 und 27 in der jeweils entgegengesetzten Richtung betätigt, um die Ausgangsstellung der Bearbeitungsstation 12 nach Fig. 4 wieder herzustellen, in der das fertige Kunststoffteil 10 entnommen und durch ein weiteres zu bearbeitendes Kunststoffteil 10 ersetzt werden kann.

Soll der einzulegende Adapter mit dem Kunststoffteil 10 durch Kleben verbunden werden, wird das Schweißwerkzeug 22 z. B. durch eine Andrückplatte ersetzt, die den Adapter und das Kunststoffteil 10 zwischen sich und dem Niederhalter 25 einspannt, bis ein manuell oder automatisch aufgebrachter Kleber ausreichend gehärtet ist.

Ist es erwünscht, das Stanzloch von unten her konisch an- oder aufzubohren, d. h. z. B. durch Fräsen mit einer konischen Innenbohrung oder einer Fase am unteren Rand zu versehen, kann das Werkzeug 22 auch als Fräskopf ausgebildet sein, der mittels eines Elektromotors od. dgl. in Rotation versetzbar ist. Alternativ kann vorgesehen sein, zwischen den beiden Werkzeugen 19 und 22 ein drittes Werkzeug in Form eines Fräskopfes an der Halterung 18 zu befestigen und dieses analog zum Werkzeug 22 mit einer zusätzlichen Zylinder/Kolben-Anordnung in z-Richtung verschiebbar zu lagern. Es ist dann möglich, die Halterung 18 in einem ersten Schritt so zu bewegen, dass nach dem Stanzvorgang zunächst der Fräskopf auf das Stanzloch ausgerichtet und zu diesen Bearbeitung benutzt wird. In einen zweiten Schritt kann die Halterung 18 bei Bedarf dann nochmals verschoben werden, um in der oben beschriebenen Weise das Werkzeug 22 unter dem Stanzloch zu positionieren und den Adapter einzusetzen. Alternativ wäre es allerdings auch möglich, die zuletzt genannte Bearbeitung in einer zweiten Bearbeitungsstation durchzuführen.

Ein besonderer Vorteil der beschriebenen Vorrichtung besteht darin, dass nach einer einmaligen Einstellung der relativen Lagen und Abstände der Werkzeuge 19, 22, 24, 25 zueinander lediglich die Halterung 18 mit einem daran angepassten Hub hin- und herbewegt werden braucht. Das kann mit einer sehr hohen und insbesondere mit einer höheren Genauigkeit als eine Verschiebung der Kunststoffteile 10 erfolgen.

Die Erfindung ist nicht auf das beschriebene Ausführungsbeispiel beschränkt, das auf vielfache Weise abgewandelt werden kann. Insbesondere wäre es nach einer derzeit für am besten gehaltenen Ausführungsform möglich, den Niederhalter 25 mittels einer weiteren Zylinder/Kolben-Anordnung an einem den Stanzstempel 24 tragenden Halter zu befestigen, damit er unabhängig vom Stanzwerkzeug 24 in z-Richtung auf- und abbewegt werden kann. Weiter kann, wie Fig. 2 und 3 zeigen, z. B. eine Mehrzahl der Bearbeitungsstationen 12 pro Wechselmodul 7 vorhanden sein. Außerdem können in jedem Wechselmodul 7 auch zusätzliche, nur zum Stanzen oder nur zum Fräsen/-Schweißen/Kleben oder für ganz andere Bearbeitungsaufgaben bestimmte Werkzeuge vorhanden sein. Dabei ergibt sich stets der Vorteil, dass alle Bearbeitungen ohne Änderung der Lage der Kunststoffteile 10 bzw. der Aufnahme 9 stets an denselben, z. B. durch eine Stanzachse vorgegebenen Bearbeitungsorten der Kunststoffteile vorgenommen werden können. Alternativ ist es auch möglich, in einem Grundgestell 2 zwei oder mehr, entsprechend vorbereitete Wechselmodule bzw. Wechselmodulabschnitte anzuordnen, in welchem Fall diese und ggf. auch das Grundgestell 2 zweckmäßig mit zusammenwirkenden Positionierungsmitteln versehen werden, um umständliche Feinjustierungen der Wechselmodule bzw. Wechselmodulabschnitte relativ zueinander zu vermeiden. Die Aufnahme 9 könnte in diesem Fall aus einer der Zahl der Wechselmodule bzw. Wechselmodulabschnitte entsprechenden Anzahl von Abschnitten zusammengesetzt werden. Möglich wäre es auch, die Bewegung der Halterung 18, mittels derer die an ihr befestigten Werkzeuge nacheinander in die jeweilige Bearbeitungsposition gebracht werden, mit anderen als den dargestellten Mitteln herbeizuführen und z. B. die dargestellte Linearbewegung durch eine Drehbewegung zu ersetzen. Weiterhin wäre es möglich, den separaten Schaltschrank 3 wegzulassen und stattdessen die in ihm vorhandenen Aggregate in das Grundgestell 2 zu integrieren. Schließlich versteht sich, dass die verschiedenen Merkmale auch in anderen als den beschriebenen und dargestellten Kombinationen angewendet werden können.

## Patentansprüche

1. Vorrichtung zur nacheinander erfolgenden Durchführung von Stanz- und Fräs-, Schweiß- und/oder Klebearbeiten an großflächigen, dreidimensionalen Kunststoffteilen (10) für Kraftfahrzeuge, insbesondere Stoßfängern, mit wenigstens einer Aufnahme (9) für die Kunststoffteile (10) sowie einem Unterwerkzeug (16) und einem Oberwerkzeug (17), wobei das Unterwerkzeug (16) und das Oberwerkzeug (17) Werkzeuge (19, 22 bzw. 24, 25) aufweisen, die zumindest teilweise parallel bzw. in Richtung einer vorgegebenen Achse (z) beweglich gelagert sind und dazu dienen, die Kunststoffteile (10) zunächst mit einem Stanzloch zu versehen und dann im Bereich des Stanzlochs wenigstens einen weiteren Bearbeitungsschritt durch Fräsen, Schweißen und/oder Kleben auszuführen, **dadurch gekennzeichnet, dass** die Aufnahme (9) stationär angeordnet ist, die Werkzeuge (19, 22 bzw. 24, 25) des Unter- oder Oberwerkzeugs (16, 17) an einer quer zu der Achse (z) beweglich gelagerten Halterung (z. B. 18) montiert sind und ein Mittel zur Bewegung der Halterung (18) derart vorgesehen ist, dass die an ihr montierten Werkzeuge (19, 22 bzw. 24, 25) nacheinander in eine Bearbeitungsstellung bringbar sind, die durch eine vorgegebene Bearbeitungsstelle der Kunststoffteile (10) festgelegt ist.

2. Vorrichtung nach Anspruch 1, **dadurch gekennzeichnet, dass** das Unterwerkzeug (16) ein Werkzeug (19) in Form einer zum Stanzen bestimmten Matrize aufweist.

3. Vorrichtung nach Anspruch 1 oder 2, **dadurch gekennzeichnet, dass** das Unterwerkzeug (16) wenigstens ein weiteres, zum Fräsen, Schweißen oder Kleben bestimmtes Werkzeug (22) enthält.

4. Vorrichtung nach Anspruch 2, **dadurch gekennzeichnet, dass** das weitere Werkzeug (22) ein drehbar gelagerter Fräskopf ist.

5. Vorrichtung nach Anspruch 3, **dadurch gekennzeichnet, dass** das weitere Werkzeug (22) eine zur Durchführung von Schweißarbeiten bestimmte Sonotrode ist.

6. Vorrichtung nach Anspruch 3, **dadurch gekennzeichnet, dass** das weitere Werkzeug (22) eine zur Durchführung von Klebearbeiten bestimmte Andrückplatte ist.

7. Vorrichtung nach einem der Ansprüche 1 bis 6, **dadurch gekennzeichnet, dass** sie eine bezüglich der Aufnahme (9) quer und schräg nach unten erstreckte Führung (20) aufweist, längs derer die Halterung (18) verschiebbar gelagert ist.

8. Vorrichtung nach Anspruch 7, **dadurch gekennzeichnet, dass** das Mittel zur Bewegung der Halterung (18) eine Zylinder/Kolben-Anordnung (21) ist.

9. Vorrichtung nach einem der Ansprüche 3 bis 8, **dadurch gekennzeichnet, dass** das weitere Werkzeug (22) mit einem zum Aufstecken von Adaptern bestimmten Dorn (28) versehen ist.

10. Vorrichtung nach einem der Ansprüche 3 bis 9, **dadurch gekennzeichnet, dass** das weitere Werkzeug (22) parallel zu der Achse (z) verschiebbar an der Halterung (18) gelagert ist.

11. Vorrichtung nach Anspruch 10, **dadurch gekennzeichnet, dass** zur Verschiebung des weiteren Werkzeugs (22) eine Zylinder/Kolben-Anordnung (23) vorgesehen ist.

12. Vorrichtung nach einem der Ansprüche 1 bis 11, **dadurch gekennzeichnet, dass** sie einen stationären Bügel (15) mit einer Führung (26) aufweist, an der das Oberwerkzeug (17) parallel zu einer Stanzachse (z) auf- und abbewegbar ist.

13. Vorrichtung nach einem der Ansprüche 1 bis 12, **dadurch gekennzeichnet, dass** das Oberwerkzeug (17) ein Werkzeug (24) in Form eines Stanzstempels aufweist.

14. Vorrichtung nach einem der Ansprüche 1 bis 13, **dadurch gekennzeichnet, dass** das Oberwerkzeug (17) ein Werkzeug in Form eines in Richtung der Aufnahme (9) vor- und zurückbewegbaren Niederhalters (25) für die Kunststoffteile (10) aufweist.

15. Vorrichtung nach Anspruch 14, **dadurch gekennzeichnet, dass** der Niederhalter (25) relativ zum Stanzstempel (24) beweglich am Oberwerkzeug (17) gelagert ist.

16. Vorrichtung nach Anspruch 15, **dadurch gekennzeichnet, dass** das Oberwerkzeug (17) ein Werkzeug (24) in Form einer zum Stanzen bestimmte Sonotrode aufweist.

17. Vorrichtung nach einem der Ansprüche 13 bis 16, **dadurch gekennzeichnet, dass** zur Verschiebung des Oberwerkzeugs (17) eine Zylinder/Kolben-Anordnung (27) vorgesehen ist.

18. Vorrichtung nach einem der Ansprüche 1 bis 17, **dadurch gekennzeichnet, dass** sie eine Grundeinheit (1) enthält, die mit zum Betrieb der Werkzeuge (15, 22, 24, 25) bestimmten, z. B. elektrischen, elektronischen und/oder pneumatischen Einrichtungen sowie an diese Einrichtungen angeschlossenen Versorgungsleitungen für die Werkzeuge (19, 22, 24, 25) versehen ist, die Aufnahme (9), das Unterwerkzeug (16) und das Oberwerkzeug (17) eine Bearbeitungsstation (12) bilden; die ein Bestandteil eines als Ganzes auswechselbar in die Grundheit (1) einsetzbaren Wechselmoduls (7) ist, und dass die Werkzeuge (19, 22, 24, 25) mit zum Anschluss an die Versorgungsleitungen bestimmten Anschlusselementen versehen sind.

19. Vorrichtung nach Anspruch 18, **dadurch gekennzeichnet, dass** sie eine Mehrzahl von an die Versorgungsleitungen anschließbaren Bearbeitungsstationen (12) enthält, die zu wenigstens zwei separaten, auswechselbar in die Grundeinheit (1) einsetzbaren Wechselmodulen (7) zusammengefasst sind, und dass die Wechselmodule (7) und ggf. auch die Grundeinheit (1) mit zusammenwirkenden, zur Lagefixierung der Wechselmodule (7) relativ zueinander bestimmten Positionierungsmitteln versehen sind.

20. Vorrichtung nach Anspruch 18, **dadurch gekennzeichnet, dass** sie eine Mehrzahl von an die Versorgungsleitungen anschließbaren Bearbeitungsstationen (12) enthält, die in einem gemeinsamen, auswechselbar in die Grundeinheit (1) einsetzbaren Wechselmodul (7) untergebracht und in diesem relativ zur Aufnahme (9) und relativ zueinander ausgerichtet sind.

21. Vorrichtung nach einem der Ansprüche 18 bis 20, **dadurch gekennzeichnet, dass** die Grundeinheit (1) ein zur Aufnahme des wenigstens einen Wechselmoduls (7) bestimmtes Grundgestell (2) und einen die z. B. elektrischen, elektronischen und/oder pneumatischen Einrichtungen aufnehmenden Schaltschrank (3) enthält.

22. Vorrichtung nach einem der Ansprüche 18 bis 21, **dadurch gekennzeichnet, dass** sie Mittel zum automatischen Auswechseln der Wechselmodule (7) enthält.

## Claims

1. An apparatus for the sequential carrying out of stamping work and milling work, welding work and/or adhesive bonding work on large area, three-dimensional plastic parts (10) for motor vehicles, in particular bumpers, comprising at least one holder (9) for the plastic parts (10); as well as a lower tool (16) and an upper tool (17), said lower tool (16) and said upper tool (17) having tools (19, 22 and 24, 25 respectively) which are movably supported at least partly in parallel or in the direction of a predetermined axis (z) and which serve first to provide the plastic parts (10) with a stamped hole and then to carry out at least one further machining step in the region of the stamped hole by milling, welding and/or adhesive bonding, **characterized in that** the holder (9) is arranged in a stationary manner; **in that** the tools (19, 22 and 24, 25 respectively) of the lower tool and upper tool (16, 17) are mounted at a bracket (e.g. 18) movably supported transversely to the axis (z); and **in that** a means is provided for the movement of the bracket (18) such that the tools (19, 22 and 24, 25 respectively) mounted thereon can be moved sequentially into a machining position which is determined by a predetermined machining site of the plastic parts (10).

2. An apparatus according to claim 1, **characterized in that** the lower tool (16) has a tool (19) in the form of a die designed for the stamping.

3. An apparatus according to claim 1 or claim 2, **characterized in that** the lower tool (16) includes at least one further tool (22) designed for milling, welding or adhesive bonding.

4. An apparatus according to claim 2, **characterized in that** the further tool (22) is a rotatably mounted milling head.

5. An apparatus according to claim 3, **characterized in that** the further tool (22) is a sonotrode designed for carrying out welding work.

6. An apparatus according to claim 3, **characterized in that** the further tool (22) is a pressure plate designed for carrying out adhesive bonding work.

7. An apparatus according to any one of the claims 1 to 6, **characterized in that** it has a guide (20) which extends transversely and obliquely downwardly with respect to the holder (9) and along which the bracket (18) is displaceably mounted.

8. An apparatus according to claim 7, **characterized in that** the means for moving the bracket (18) is a piston-in-cylinder arrangement (21).

9. An apparatus according to any one of the claims 3 to 8, **characterized in that** the further tool (22) is provided with a mandrel (28) designed for the placing on of adapters.

10. An apparatus according to any one of the claims 3 to 9, **characterized in that** the further tool (22) is supported at the bracket (18) displaceably parallel to the axis (z).

11. An apparatus according to claim 10, **characterized in that** a piston-in-cylinder arrangement (23) is provided for the displacement of the further tool (22).

12. An apparatus according to any one of the claims 1 to 11, **characterized in that** it has a stationary hoop (15) with a guide (26) at which the upper tool (17) is movable up and down parallel to a stamping axis (z).

13. An apparatus according to any one of the claims 1 to 12, **characterized in that** the upper tool (17) has a tool (24) in the form of a stamping die.

14. An apparatus according to any one of the claims 1 to 13, **characterized in that** the upper tool (17) has a tool in the form of a hold-down device (25) for the plastic parts (10) which is movable to and fro in the direction of the holder (9).

15. An apparatus according to claim 14, **characterized in that** the hold-down device (25) is supported movably relative to the stamping die (24) at the upper tool (17).

16. An apparatus according to claim 15, **characterized in that** the upper tool (17) has a tool (24) in the form of a sonotrode designed for the stamping.

17. An apparatus according to any one of the claims 13 to 16, **characterized in that** a piston-in-cylinder arrangement (27) is provided for the displacement of the upper tool (17).

18. An apparatus according to any one of the claims 1 to 17, **characterized in that** it includes a base unit (1) which is provided with e.g. electrical, electronic and/or pneumatic devices designed for the operation of the tools (15, 22, 24, 25) as well as with supply lines for the tools (19, 22, 24, 25) and connected to these devices; **in that** the holder (9), the lower tool (16) and the upper tool (17) form a machining station (12) which is a component of an interchangeable module (7) which can be inserted interchangeably as a whole into the base unit (1); and **in that** the tools (19, 22, 24, 25) are provided with connector elements designed for connection to the supply lines.

19. An apparatus according to claim 18, **characterized in that** it includes a plurality of machining stations (12) which can be connected to the supply lines and which are combined into at least two separate interchangeable modules (7) which can be inserted interchangeably into the base unit (1); and **in that** the interchangeable modules (7) and optionally also the base unit (1) are provided with cooperating positioning means designed for the positional fixing of the interchangeable modules (7) relative to one another

20. An apparatus according to claim 18, **characterized in that** it includes a plurality of machining stations (12) which can be connected to the supply lines and which are accommodated in a common interchangeable module (7) which can be inserted interchangeably into the base unit (1) and are aligned in said interchangeable module relative to the holder (9) and relative to one another.

21. An apparatus according to any one of the claims 18 to 20, **characterized in that** the base unit (1) includes a base rack (2) designed to receive the at least one interchangeable module (7) and a switch cabinet (3) accommodating the e.g. electrical, electronic and/or pneumatic devices.

22. An apparatus according to any one of the claims 18 to 21, **characterized in that** it includes means for the automatic exchange of the interchangeable modules (7).

## Revendications

1. Dispositif pour exécuter successivement des travaux d'estampage et de fraisage, de soudage et/ou de collage sur des pièces (10) en matière plastique tridimensionnelles de grandes surfaces pour véhicules automobile, en particulier sur des pare-chocs, présentant au moins un logement (9) pour les pièces en matière plastique (10) ainsi qu'un outil inférieur (16) et un outil supérieur (17), l'outil inférieur (16) et l'outil supérieur (17) comprenant des outils (19, 22 ou 24, 25) qui sont montés mobiles au moins partiellement parallèlement ou en direction d'un axe donné (z) et qui servent à pourvoir les pièces en matière plastique (10) tout d'abord d'un trou d'estampage et à réaliser ensuite, dans la zone du trou d'estampage, au moins une autre étape d'usinage par fraisage, par soudage et/ou par collage, **caractérisé en ce que** le logement (9) est agencé de façon stationnaire, les outils (19, 22 ou 24, 25) de l'outil inférieur ou supérieur (16, 17) sont montés sur une monture (par exemple 18) montée mobile transversalement à l'axe (z), et il est prévu un moyen pour déplacer la monture (18) de telle sorte que les outils (19, 22 ou 24, 25) montés sur celle-ci sont susceptibles d'être amenés successivement dans une position d'usinage qui est déterminée par un emplacement d'usinage donné des pièces en matière plastique (10).

2. Dispositif selon la revendication 1, **caractérisé en ce que** l'outil inférieur (16) comprend un outil (19) sous la forme d'une matrice destinée à l'estampage.

3. Dispositif selon la revendication 1 ou 2, **caractérisé en ce que** l'outil inférieur (16) comprend au moins un autre outil (22) destiné au fraisage, au soudage ou au collage.

4. Dispositif selon la revendication 2, **caractérisé en ce que** l'autre outil (22) est une tête de fraisage montée rotative.

5. Dispositif selon la revendication 3, **caractérisé en ce que** l'autre outil (22) est une sonotrode destinée à exécuter des travaux de soudage.

6. Dispositif selon la revendication 3, **caractérisé en ce que** l'autre outil (22) est une plaque de pressage destinée à exécuter des travaux de collage.

7. Dispositif selon l'une des revendications 1 à 6, **caractérisé en ce qu'**il comprend un guidage (20) qui s'étend transversalement et en oblique vers le bas par rapport au logement (9) et le long duquel la monture (18) est montée mobile en translation.

8. Dispositif selon la revendication 7, **caractérisé en ce que** le moyen pour déplacer la monture (18) est un agencement à piston-et-cylindre (21).

9. Dispositif selon l'une des revendications 3 à 8, **caractérisé en ce que** l'autre outil (22) est pourvu d'un mandrin (28) destiné à enficher des adaptateurs.

10. Dispositif selon l'une des revendications 3 à 9, **caractérisé en ce que** l'autre outil (22) est monté sur la monture (18) en étant mobile en translation parallèlement à l'axe (z).

11. Dispositif selon la revendication 10, **caractérisé en ce que** pour la translation de l'autre outil (22), il est prévu un agencement à piston-et-cylindre (23).

12. Dispositif selon l'une des revendications 1 à 11, **caractérisé en ce qu'**il comprend un étrier stationnaire (15) pourvu d'un guidage (26) sur lequel l'outil supérieur (17) est mobile vers le haut et vers le bas parallèlement à un axe d'estampage (z).

13. Dispositif selon l'une des revendications 1 à 12, **caractérisé en ce que** l'outil supérieur (17) comprend un outil (24) sous la forme d'un poinçon d'estampage.

14. Dispositif selon l'une des revendications 1 à 13, **caractérisé en ce que** l'outil supérieur (17) comprend un outil sous la forme d'un élément de maintien vers le bas (25) pour les pièces en matière plastique (10), qui est susceptible d'avancer et de reculer dans la direction du logement (9).

15. Dispositif selon la revendication 14, **caractérisé en ce que** l'élément de maintien vers le bas (25) est monté sur l'outil supérieur (17) en étant mobile par rapport au poinçon d'estampage (24).

16. Dispositif selon la revendication 15, **caractérisé en ce que** l'outil supérieur (17) comprend un outil (24) sous la forme d'une sonotrode destinée à l'estampage.

17. Dispositif selon l'une des revendications 13 à 16, **caractérisé en ce que** pour déplacer l'outil supérieur (17), il est prévu un agencement à piston-et-cylindre (27).

18. Dispositif selon l'une des revendications 1 à 17, **caractérisé en ce qu'**il comprend une unité de base (1) qui est pourvue d'organes, par exemple électriques, électroniques et/ou pneumatiques, destinés au fonctionnement des outils (15, 22, 24, 25), ainsi que de conduites d'alimentation pour les outils (19, 22, 24, 25) branchées à ces organes, **en ce que** le logement (9), l'outil inférieur (16) et l'outil supérieur (17) constituent un poste d'usinage (12) qui fait partie d'un module interchangeable (7) susceptible d'être mis en place de façon interchangeable dans son ensemble dans l'unité de base (1), et **en ce que** les outils (19, 22, 24, 25) sont pourvus d'éléments de raccordement destinés au raccordement aux conduites d'alimentation.

19. Dispositif selon la revendication 18, **caractérisé en ce qu'**il comprend une pluralité de postes d'usinage (12) susceptibles d'être raccordés aux conduites d'alimentation et réunis en au moins deux modules interchangeables séparés (7) mis en place de façon interchangeable dans l'unité de base (1), et **en ce que** les modules interchangeables (7) et le cas échéant également l'unité de base (1) sont pourvus de moyens de positionnement coopérants et destinés à la fixation de la position des modules interchangeables (7) l'un par rapport à l'autre.

20. Dispositif selon la revendication 18, **caractérisé en ce qu'**il comprend une pluralité de postes d'usinage (12) qui sont susceptibles d'être raccordés aux conduites d'alimentation, qui sont logés dans un module interchangeable commun (7) susceptible d'être mis en place de façon interchangeable dans l'unité de base (1), et qui, dans ledit module, sont orientés par rapport au logement (9) et les uns par rapport aux autres.

21. Dispositif selon l'une des revendications 18 à 20, **caractérisé en ce que** l'unité de base (1) comprend un bâti de base (2) destiné à recevoir ledit au moins un module interchangeable (7), et une armoire électrique (3) recevant les organes par exemple électriques, électroniques et/ou pneumatiques.

22. Dispositif selon l'une des revendications 18 à 21, **caractérisé en ce qu'**il comprend des moyens pour le changement automatique des modules interchangeables (8).
